# EUROPEAN PATENT APPLICATION

(11) **EP 4 678 891 A2**
(43) Date of publication of application: **14.01.2026**
(21) Application number: 25189454.9
(22) Date of filing: 14.07.2025
(51) Int. Cl.: F02C 1/10, F02C 3/22, F02C 7/143, F02C 7/224

(54) **CRYOGENIC ASSISTED BOTTOMING CYCLE**

(30) Priority: 12.07.2024 US 202418770780
(71) Applicant: RTX Corporation, Farmington, CT 06032 (US)
(72) Inventor: EVANS, Brandon M., Farmington, 06032 (US); TERWILLIGER, Neil J., Farmington, 06032 (US)
(74) Representative: Dehns

(57) **Abstract**

An aircraft propulsion system (200 includes an energy conversion device that uses a cryogenic fuel and air to generate power and thermal energy, and a bottoming cycle (44) where a working fluid is circulated within a closed circuit that includes a bottoming compressor section (50) and a bottoming turbine section (52). A primary heat exchanger (66) provides thermal communication of thermal energy from the energy conversion device to the working fluid of the bottoming cycle (44). A second heat exchanger is in thermal communication with the working fluid and a heat source other than from the energy conversion device for changing a temperature of the working fluid flow.

## Description

### TECHNICAL FIELD

The present invention relates generally to a bottom cycle for an aircraft propulsion system and more specifically to a bottoming cycle that utilizes a cryogenic fuel as a heat sink.

### BACKGROUND OF THE INVENTION

Gas turbine engines typically include a compressor where inlet air is compressed and delivered into a combustor. In the combustor, the compressed air is mixed with fuel and ignited to generate an exhaust gas flow. The exhaust flow is expanded through a turbine section to generate shaft power used to drive the compressor and a propulsive fan. Some energy in the high energy exhaust flow is recovered as it is expanded through a turbine section. However, a large amount of energy in the form of heat is simply exhausted from the turbine section to the atmosphere. A bottoming cycle utilizes recovered heat to generate additional useful work. A working fluid in the bottoming cycle is heated to drive a secondary turbine to generate additional shaft power. The working fluid in the bottoming cycle is then cooled, compressed, and reheated before expansion back through the turbine. The capability of the working fluid to accept heat limits energy recovery of the bottoming cycle.

### SUMMARY OF THE INVENTION

According to an aspect of the present invention, there is provided an aircraft propulsion system that includes, among other possible things, an energy conversion device that uses a cryogenic fuel and air to generate power and thermal energy, a bottoming cycle (or a bottoming cycle system) where a working fluid is circulated within a closed circuit that includes a bottoming compressor section and a bottoming turbine section, the working fluid is compressed in the bottoming compressor section and expanded through the bottoming turbine section to generate shaft power, a primary heat exchanger that provides thermal communication of thermal energy from the energy conversion device to the working fluid of the bottoming cycle, a fuel system that includes a cryogenic fuel storage tank and a fuel flow path for routing the cryogenic fuel to the energy conversion device, a fuel/working fluid heat exchanger that provides thermal communication between the cryogenic fuel and the working fluid to cool the working fluid flow from the bottoming turbine to the bottoming compressor. The aircraft propulsion system may optionally further include a second heat exchanger that is in thermal communication with the working fluid and a heat source other than from the energy conversion device for changing a temperature of the working fluid flow.

Optionally, and in accordance with the above, the aircraft propulsion system further includes a recuperating heat exchanger where a first portion of the working fluid flow exhausted from the bottoming turbine is in thermal communication with a second portion of the working fluid flow exhausted from the bottoming compressor for heating the second portion of the working fluid flow before expansion through the bottoming turbine.

Optionally, and in accordance with any of the above, the heat generating energy conversion device includes a gas turbine engine that includes a combustor where fuel is mixed with compressed air and ignited to generate an exhaust gas flow. The exhaust gas flow is routed through the primary heat exchanger for heating the working fluid of the bottoming cycle.

Optionally, and in accordance with any of the above, the aircraft propulsion system further includes a fuel/exhaust gas heat exchanger where the cryogenic fuel flow is heated before being communicated to the combustor of the gas turbine engine.

Optionally, and in accordance with any of the above, the aircraft propulsion system further includes an intercooling heat exchanger for cooling a portion of the working fluid flow within the bottoming compressor section.

Optionally, and in accordance with any of the above, the fuel flow path further includes a first fuel path that directs a portion of the cryogenic fuel flow through the fuel/working fluid heat exchanger and a second fuel flow path that directs a portion of the cryogenic fuel flow through the intercooling heat exchanger.

Optionally, and in accordance with any of the above, the fuel flow path further includes a bypass fuel path for routing the fuel cryogenic fuel flow around the fuel/working fluid heat exchanger.

Optionally, and in accordance with any of the above, the aircraft propulsion system further includes a valve system for controlling the cryogenic fuel flow through the first fuel flow path, the second fuel flow path and the bypass fuel path.

Optionally, and in accordance with any of the above, the bottoming compressor includes a plurality of compressor stages and the intercooling heat exchanger cools at least a portion of the working fluid flow between at least two of the plurality of compressor stages.

Optionally, and in accordance with any of the above, the aircraft propulsion system further includes an output shaft that is driven by the bottoming turbine for driving an accessory component.

Optionally, and in accordance with any of the above, the energy conversion device includes a fuel cell that uses the cryogenic fuel and air to generate electric power.

According to another aspect of the present invention, there is provided a gas turbine engine that includes, among other possible things, a core engine that includes a combustor where a cryogenic fuel is mixed with compressed air and ignited to generate an exhaust gas flow, a propulsive fan that is driven by the core engine, a bottoming cycle (or a bottoming cycle system) where a working fluid is circulated within a closed circuit that includes a bottoming compressor section and a bottoming turbine section, the working fluid is compressed in the bottoming compressor section and expanded through the bottoming turbine section to generate shaft power, a primary heat exchanger that provides communication of thermal energy from the exhaust gas flow to the working fluid of the bottoming cycle, a fuel system that includes a cryogenic fuel storage tank and a fuel flow path for routing the cryogenic fuel to the combustor of the core engine, a fuel/working fluid heat exchanger provides thermal communication between the cryogenic fuel and the working fluid to cool the working fluid flow from the bottoming turbine to the bottoming compressor. The gas turbine engine may optionally further include a second heat exchanger is in thermal communication with the working fluid and a heat source other than from the core engine for changing a temperature of the working fluid flow.

Optionally, and in accordance with any of the above, the gas turbine engine further includes a recuperating heat exchanger where a first portion of the working fluid flow exhausted from the bottoming turbine is in thermal communication with a second portion of the working fluid flow exhausted from the bottoming compressor for heating the second portion of the working fluid flow before expansion through the bottoming turbine.

Optionally, and in accordance with any of the above, the gas turbine engine further includes an intercooling heat exchanger for cooling the bottoming working fluid within the bottoming compressor wherein the bottom compressor includes a plurality of compressor stages and the intercooling system cools at least a portion of the working fluid flow between at least two of the plurality of compressor stages.

Optionally, and in accordance with any of the above, the gas turbine engine further includes a third heat exchanger that is positioned to exchange heat between the exhaust gas flow and the cryogenic fuel downstream of the fuel/working fluid heat exchanger.

Optionally, and in accordance with any of the above, the fuel flow path further includes a first fuel path that directs a portion of the cryogenic fuel flow through the fuel/working fluid heat exchanger, a second fuel flow path that directs a portion of the cryogenic fuel flow through the intercooling heat exchanger, and a bypass fuel path for routing the cryogenic fuel flow around both the intercooling heat exchanger and the fuel/working fluid heat exchanger.

Optionally, and in accordance with any of the above, the gas turbine engine further includes a valve system for controlling the cryogenic fuel flow through the first fuel flow path, the second fuel flow path and the bypass fuel path.

Optionally, and in accordance with any of the above, the gas turbine engine further includes a generator that is coupled to the bottoming turbine by an output shaft.

Optionally, and in accordance with any of the above, the gas turbine engine further includes an accessory component that is coupled to be driven by the bottoming turbine through an output shaft.

Optionally, and in accordance with any of the above, the gas turbine engine further includes an electric motor that is coupled to an engine shaft of the core engine. The electric motor is operable to supplement power that is provided by a turbine section of the core engine.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example aircraft propulsion system including bottoming cycle recuperation.
Figure 2 is a schematic view of another example aircraft propulsion system including a bottoming cycle configured to recover heat generated by a fuel cell.
Figure 3 is a schematic view of another example aircraft propulsion system including bottom cycle intercooling.

### DETAILED DESCRIPTION

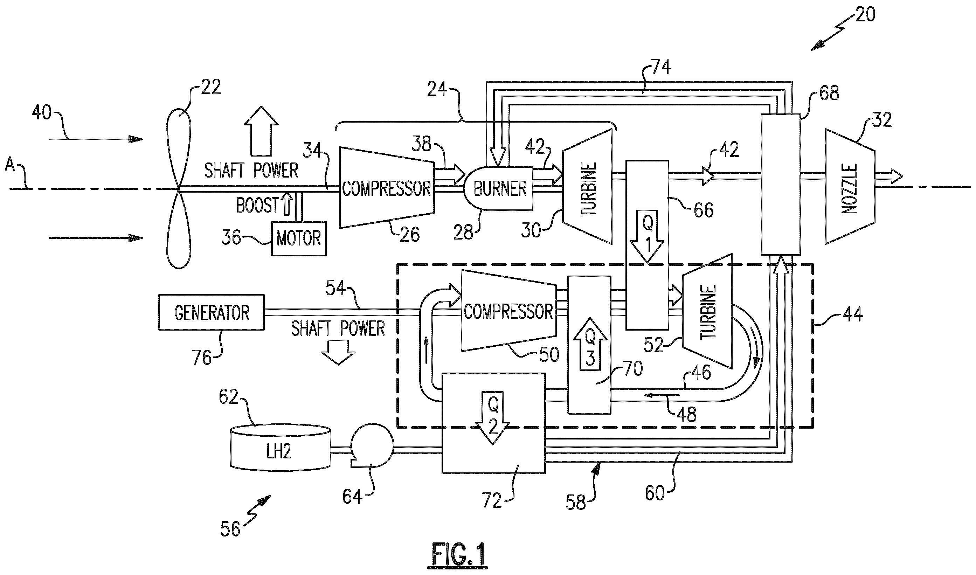

Figure 1 schematically illustrates an aircraft propulsion system 20 that includes a bottoming cycle with features improving heat absorption capability that provides improved operating efficiencies. The example bottoming cycle includes a recuperative heat exchanger for communicating thermal energy between hotter and cooler portions of the working fluid flow to improve use of the heat sink provided by a cryogenic fuel flow.

The example propulsion system 20 is disclosed as a core engine 24 that generates shaft power utilized to drive a propulsive fan 22. The example core engine 24 includes a compressor section 26, a combustor section 28 and the turbine section 30 disposed along the longitudinal axis A. The fan 22 drives an inlet airflow 40 into the compressor section 26. The inlet flow 40 is compressed and communicated as a pressurized core flow 38 to the combustor section 28 where it is mixed with a fuel flow 74 and ignited to generate the exhaust gas flow 42. The exhaust gas flow 42 expands through the turbine section 30 where energy is extracted and utilized to generate shaft power to drive an engine shaft 34. The engine shaft 34 drives the compressor section 26 and the fan 22. The exhaust gas flow 42 is subsequently exhausted through a nozzle 32.

Although an example engine architecture is disclosed by way of example, other turbine engine architectures are within the contemplation and scope of this disclosure. Moreover, although the disclosed non-limiting embodiment depicts a turbofan turbine engine, it should be understood that the concepts described herein are not limited to use with turbofans as the teachings may be applied to other types of turbine engines. Additionally, the features of this disclosure may be applied to other engine configurations utilized to generate shaft power.

A cryogenic fuel system 56 includes at least a fuel tank 62 and a fuel pump 64 to provide a liquid fuel flow 60 through a fuel passage 58 to the combustor 28. The example fuel system 56 is configured to provide a hydrogen based fuel such as a liquid hydrogen (LH₂). Although hydrogen is disclosed by way of example, other cryogenic, non-carbon based fuels could be utilized and are within the contemplation of this disclosure.

The fuel in the tank 62 incudes features for storing a cryogenic fuel at temperatures required to maintain the fuel in a liquid phase. Temperatures required to maintain the cryogenic fuel in a liquid phase may be as low as about -412°F (-247 °C). In one example embodiment, the cryogenic fuel is maintained at a temperature below 0 °F (-18 °C). In another example embodiment, the fuel is maintained in the tank 62 at temperatures below -100 °F (-73 °C). The cryogenic fuel may be maintained at temperatures below about -150 °F (-101 °C) and as low as about -435 °F (-259 °C).

The low temperatures of the cryogenic fuel 60 provide a source of heat absorption that is utilized in a bottoming cycle 44. The bottoming cycle 44 provides for recovering thermal energy otherwise lost as exhaust through the nozzle 32.

The example bottoming cycle 44 includes a bottoming compressor 50 that is driven by a bottoming turbine 52 though a bottoming shaft 54. A working fluid 48 is cycled within a closed circuit 46 between the bottoming compressor 50 and the bottoming turbine 52. The working fluid 48 is compressed in the bottoming compressor 50, heated within the heat exchanger 66, and then expanded through the bottoming turbine 52 to drive the bottoming shaft 54. In one disclosed example, the output shaft 54 is coupled to drive a generator 76. Although the example output shaft 54 is illustrated as driving a generator 76, other accessory components of the propulsion system 20 or aircraft may be coupled to and driven by the output shaft 54. Example accessory components may include, among other devices, a fuel pump, an environmental control system air pump, or a hydraulic pump. The output shaft 54 may also be mechanically tied to an engine shaft to provide additional power to the core engine.

A first or primary heat exchanger 66 provides thermal communication of heat from the exhaust gas flow 42 into the working fluid 48 of the bottoming cycle 44. Compressed working fluid from the bottoming compressor 50 is heated by thermal energy communicated through the primary heat exchanger 66.

The expanded working fluid 48 exhausted from the bottoming turbine 52 is communicated through a recuperative heat exchanger 70. Thermal energy from the working fluid 48 exhausted from the bottoming turbine 52 is transferred into a portion of the working fluid flow exhausted from the bottoming compressor 50. **In** this manner, heat that would normally be lost is utilized to heat the working fluid flow prior to introduction into the bottoming turbine 52. Moreover, the working fluid 48 from the bottoming turbine 52 is initially cooled.

Accordingly, the compressed working fluid flow that is exhausted from the bottoming compressor 50 is heated both by other portions of the working fluid and by thermal energy transferred through the first heat exchanger 66 from the exhaust gas flow 42 produced by the core engine 24.

A fuel/working fluid heat exchanger 72 places the working fluid in thermal contact with the liquid fuel flow 60. The fuel flow 60 accepts heat from the working fluid to cool the working fluid prior to introduction back into the bottoming compressor 50. The liquid fuel flow 60 is vaporized prior to introduction into the combustor 28 and therefore heat transferred from the working fluid is utilized to aid in heating of the fuel. An exhaust heat exchanger 68 is disposed downstream of the first heat exchanger 66 and provides further heating and transformation into a vaporized fuel flow 74. The vaporized fuel flow 74 is injected into the combustor 28 to generate the exhaust gas flow 42.

**In** some examples, shaft power generated by the bottoming turbine 52 may be utilized to drive a generator 76 and produce electric power. The produced electric power may be used by other engine and aircraft systems. **In** one example embodiment, an electric motor 36 is coupled to the engine shaft 34. The electric motor 36 may be operated to input power to the engine shaft 34 to supplement power provided by the turbine 30. Although an example use of power from the bottoming cycle 44 is disclosed, other uses of the power recovered by operation of the bottoming turbine 52 are within the contemplation and scope of this disclosure.

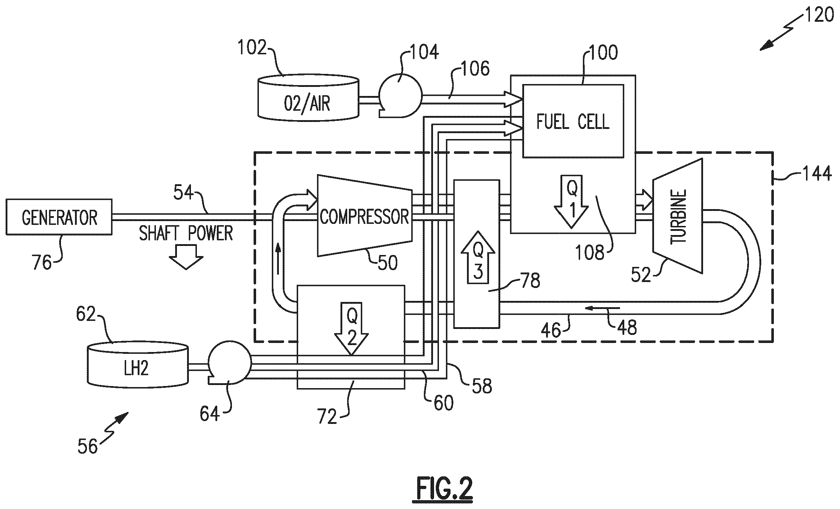

Referring to Figure 2, another example aircraft propulsion system is generally indicated at 120 and includes a fuel cell 100 that generates electric power from a flow of cryogenic fuel 60 and oxygen 106. An oxygen system includes an oxygen source 102 and pump 104 for generating on the oxygen flow 106 used in generating electric power. The oxygen source 102, may be a storage tank or a separation device that concentrates oxygen drawn from ambient air. Other oxygen sources may be utilized and are within the contemplation and scope of this disclosure.

The fuel cell 100 generates heat during operation. The thermal energy generated during the production of electric power is communicated to the working fluid flow 48 through a heat exchanger 108. In one disclosed example embodiment, thermal energy is transferred through the heat exchanger 108 into the working fluid after the bottoming compressor 50 and before expansion through the bottoming turbine 52.

A recuperative heat exchanger 78 provides for the transfer of thermal energy from the working fluid 48 exhausted from the bottoming turbine 52 into a portion of the working fluid flow exhausted from the bottoming compressor 50. In this manner, heat that would normally be lost is utilized to heat the working fluid flow prior to introduction into the bottoming turbine 52. Moreover, the working fluid 48 from the bottoming turbine 52 is initially cooled.

The fuel flow 60 is communicated through the fuel/working fluid heat exchanger 72 to cool the working fluid and to heat the fuel flow 60. The heated fuel flow 60 is introduced into the fuel cell 100 and combined with the oxygen flow 106 to generate electric power. Heat generated by the fuel cell 100 is input into the working fluid. The heated working fluid is expanded through the bottoming turbine 52 to generate shaft power to drive the shaft 54. Heat from the working fluid is subsequently used to heat the fuel flow 60.

The example propulsion system 120 illustrates that heat sources other than those originating from combustion may be utilized by the example bottoming system 144. Moreover, the example bottoming system 144 may be utilized to capture and recover thermal energy generated by alternate devices and processes associated with an aircraft propulsion system 120.

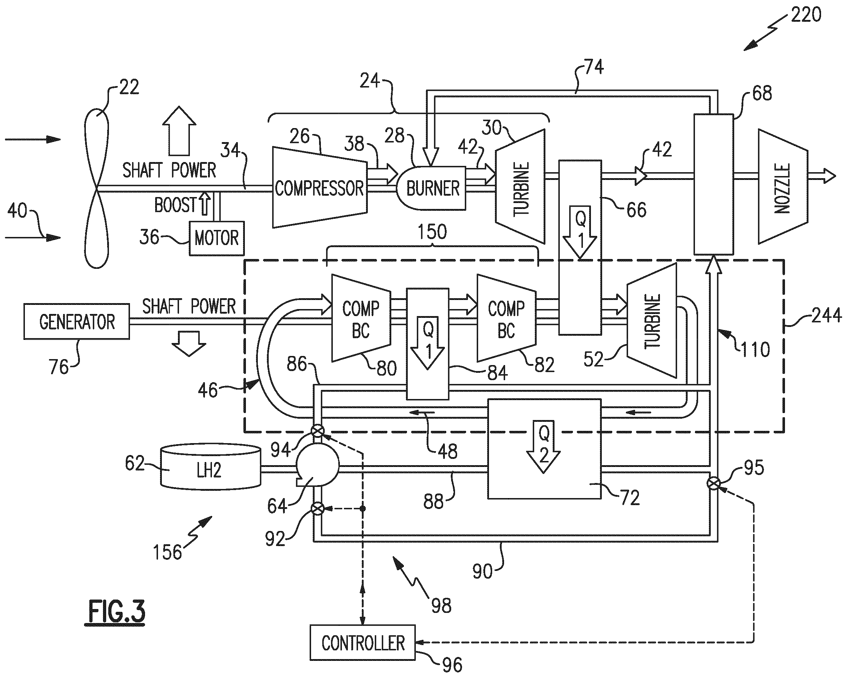

Referring to Figure 3, another example aircraft propulsion system is schematically indicated at 220 and includes a bottoming cycle 244 with an intercooled bottoming compressor section 150.

The compressor section 150 includes a first bottoming compressor stage 80 and a second bottoming compressor stage 82. An intercooling heat exchanger 84 is disposed between the first compressor stage 80 and the second compressor stage 82. The intercooling heat exchanger 84 is in thermal communication with a flow of the cryogenic fuel 86 to cool the working fluid flow between the first and second compressor stages 80, 82. Intercooling of the working fluid flow between compressor stages 80, 82 provides for an increased efficiency in compressor operation. The increased efficiency is provided by reducing the amount of work required by each compressor stage 80, 82 to compress the working fluid. Moreover, the additional heat that is input into the cryogenic fuel flow aids in the vaporization of the cryogenic fuel prior to injection into the combustor 28.

The example fuel system 156 of the propulsion system 220 includes a plurality of fuel paths that enable operation to be tailored to current operating demands. In one example embodiment, the fuel system 156 includes a fuel pump 64 that pumps cryogenic fuel from the fuel tank 62 through a first fuel path 86 and a second fuel path 88. The first fuel path 86 communicates the cryogenic fuel flow through the intercooling heat exchanger 84. The second fuel flow path 88 provides for flow of cryogenic fuel through the fuel/working fluid heat exchanger 72 to cool the working fluid flow after it has been exhausted through the bottoming turbine 52. The example fuel system 56 further includes a bypass fuel passage 90 that bypasses both the intercooling heat exchanger 84 and the fuel working fluid heat exchanger 72.

A first valve 92, a second valve 94, and a third valve 95 are part of a valve system 98. A controller 96 is programmed to operate the valve control system 98 to tailor operation fuel system 156 and the bottoming 244 based on the operation of the core engine 24. The example controller 96 is a device and system for performing necessary computing or calculation operations of the valve system 98. The controller 96 may be specially constructed for operation of the valve system 98, or it may comprise at least a general-purpose computer selectively activated or reconfigured by software instructions stored in a memory device. The controller 96 may further be part of full authority digital engine control (FADEC) or an electronic engine controller (EEC).

The valve system 98 controls flow of the cryogenic fuel through the first, second and bypass flow passages 86, 88, and 90. Each of the first, second and bypass flow passages 86, 88, and 90 are rejoined in a common passage 110 that is directed through the exhaust heat exchanger 68 to generate a vaporized fuel flow 74 that is subsequently communicated to the combustor 28.

As the temperature of the working fluid in the bottoming cycle 244 increases, more work is required for compression by the bottoming compressor section 150. The working fluid is desired to be maintained as a fluid throughout the compression process. Accordingly, the intercooling heat exchanger 84 provides for cooling of the working fluid during operation that may result in heating of the working fluid outside of a preferred operating range. Alternatively, in some operating states, cooling is not necessary and the valve system 98 adjusted to shut off flow through the intercooling heat exchanger 84.

Additionally, in some operating conditions, cooling of the working fluid can be provided by the cooling provided by only the intercooling heat exchanger 84. In such operating conditions, the fuel flow may be bypassed around the fuel/working fluid heat exchanger 72. The first and second flow paths 86, 88 and the bypass passage 90 provides for tailoring cooling inputs into the working fluid to maintain the working fluid within a desired temperature range that improves bottoming cycle efficiency.

Accordingly, the example propulsion systems include bottoming cycles that leverage the cold sink available by the cryogenic fuels and tailors operation to optimize bottoming cycle efficiency.

Although embodiments of this disclosure have been shown, a worker of ordinary skill in this art would recognize that modifications would come within the scope of this disclosure. For that reason, the following claims should be studied to determine the true scope and content of this disclosure.

## Claims

1. An aircraft propulsion system (20;120;220) comprising:
an energy conversion device that uses a cryogenic fuel and air to generate power and thermal energy;
a bottoming cycle (44;144;244) in which a working fluid is circulated within a closed circuit comprising a bottoming compressor section (50;150) and a bottoming turbine section (52), wherein the working fluid is compressed in the bottoming compressor section (50;150) and expanded through the bottoming turbine section (52) to generate shaft power;
a primary heat exchanger (66;108) providing thermal communication of thermal energy from the energy conversion device to the working fluid of the bottoming cycle (44;144;244); and
a fuel system (56;156) comprising a cryogenic fuel storage tank (62) and a fuel flow path for routing the cryogenic fuel to the energy conversion device, wherein a fuel/working fluid heat exchanger (72) provides thermal communication between the cryogenic fuel and the working fluid to cool a working fluid flow from the bottoming turbine section (52) to the bottoming compressor section (50;150).

2. The aircraft propulsion system (20;220) as recited in claim 1, wherein the energy conversion device comprises a gas turbine engine (24) comprising a combustor (28) in which fuel is mixed with compressed air and ignited to generate an exhaust gas flow (42), and the exhaust gas flow (42) is routed through the primary heat exchanger (66;108) for heating the working fluid of the bottoming cycle (44;244).

3. The aircraft propulsion system (20;220) as recited in claim 2, further comprising a fuel/exhaust gas heat exchanger (68) configured to heat the cryogenic fuel flow before being communicated to the combustor (28) of the gas turbine engine (24).

4. The aircraft propulsion system (220) as recited in any preceding claim, further comprising an intercooling heat exchanger (84) for cooling a portion of the working fluid flow within the bottoming compressor section (150), optionally wherein the bottoming compressor section (150) includes a plurality of compressor stages (80,82) and the intercooling heat exchanger (84) is configured to cool at least a portion of the working fluid flow between at least two of the plurality of compressor stages (80,82).

5. The aircraft propulsion system (220) as recited in claim 4, wherein the fuel flow path further comprises a first fuel path (88) directing a portion of the cryogenic fuel flow through the fuel/working fluid heat exchanger (72) and a second fuel flow path (86) directing a portion of the cryogenic fuel flow through the intercooling heat exchanger (84).

6. The aircraft propulsion system (220) as recited in claim 5, wherein the fuel flow path further comprises a bypass fuel path (90) for routing the fuel cryogenic fuel flow around the fuel/working fluid heat exchanger (72).

7. The aircraft propulsion system (220) as recited in claim 6, further comprising a valve system (98) for controlling the cryogenic fuel flow through the first fuel flow path (88), the second fuel flow path (86) and the bypass fuel path (90).

8. The aircraft propulsion system (20;120;220) as recited in any preceding claim, further comprising an output shaft (54) driven by the bottoming turbine section (52) for driving an accessory component (76).

9. The aircraft propulsion system (120) as recited in any preceding claim, wherein the energy conversion device comprises a fuel cell (100) that uses the cryogenic fuel and air to generate electric power.

10. A gas turbine engine comprising:
a core engine (24) comprising a combustor (28) in which a cryogenic fuel is mixed with compressed air and ignited to generate an exhaust gas flow (42);
a propulsive fan (22) driven by the core engine (24);
a bottoming cycle (44;244) in which a working fluid is circulated within a closed circuit comprising a bottoming compressor section (50;150) and a bottoming turbine section (52), wherein the working fluid is compressed in the bottoming compressor section (50;150) and expanded through the bottoming turbine section (52) to generate shaft power;
a primary heat exchanger (66) providing communication of thermal energy from the exhaust gas flow (42) to the working fluid of the bottoming cycle (44;244); and
a fuel system (56;156) comprising a cryogenic fuel storage tank (62) and a fuel flow path for routing the cryogenic fuel to the combustor (28) of the core engine (24), wherein a fuel/working fluid heat exchanger (72) provides thermal communication between the cryogenic fuel and the working fluid to cool a working fluid flow from the bottoming turbine section (52) to the bottoming compressor section (50;150),
optionally wherein the gas turbine engine further comprises:
an accessory component (76) coupled to be driven by the bottoming turbine section (52) through an output shaft (54); and/or
a third heat exchanger (68) positioned to exchange heat between the exhaust gas flow (42) and the cryogenic fuel downstream of the fuel/working fluid heat exchanger (72).

11. The gas turbine engine as recited in claim 10, further comprising an intercooling heat exchanger (84) for cooling the working fluid within the bottoming compressor section (150), wherein the bottom compressor section (150) includes a plurality of compressor stages (80,82) and the intercooling heat exchanger (84) is configured to cool at least a portion of the working fluid flow between at least two of the plurality of compressor stages (80,82).

12. The gas turbine engine as recited in claim 11, wherein the fuel flow path further comprises a first fuel path (88) directing a portion of the cryogenic fuel flow through the fuel/working fluid heat exchanger (72), a second fuel flow path (86) directing a portion of the cryogenic fuel flow through the intercooling heat exchanger (84), and a bypass fuel path (90) for routing the cryogenic fuel flow around both the intercooling heat exchanger (84) and the fuel/working fluid heat exchanger (72),
optionally wherein the gas turbine engine further comprises a valve system (98) for controlling the cryogenic fuel flow through the first fuel flow path (88), the second fuel flow path (86) and the bypass fuel path (90).

13. The gas turbine engine as recited in any of claims 10 to 12, further comprising a generator (76) coupled to the bottoming turbine section (52) by an output shaft (54).

14. The gas turbine engine as recited in any of claims 10 to 13, further comprising an electric motor (36) coupled to an engine shaft (34) of the core engine (24), wherein the electric motor (36) is operable to supplement power provided by a turbine section (30) of the core engine (24).

15. The aircraft propulsion system (20;120) or gas turbine engine as recited in any preceding claim, further comprising a recuperating heat exchanger (70;78) through which a first portion of the working fluid flow exhausted from the bottoming turbine section (52) is in thermal communication with a second portion of the working fluid flow exhausted from the bottoming compressor section (50) for heating the second portion of the working fluid flow before expansion through the bottoming turbine section (52).
